(19) Europäisches Patentamt
European Patent Office
Office européen des brevets

(11) **EP 1 560 772 B1**

(12) **FASCICULE DE BREVET EUROPEEN**

(45) Date de publication et mention
de la délivrance du brevet:
**16.09.2015 Bulletin 2015/38**

(21) Numéro de dépôt: **03780233.7**

(22) Date de dépôt: **23.10.2003**

(51) Int Cl.:
***B65G 47/82*** *(2006.01)*

(86) Numéro de dépôt international:
**PCT/FR2003/003138**

(87) Numéro de publication internationale:
**WO 2004/046000 (03.06.2004 Gazette 2004/23)**

(54) **MACHINE POUR TRANSFERER DES OBJETS ALIGNES EN RANGEES**

VORRICHTUNG ZUM ÜBERTRAGEN VON IN REIHEN AUSGERICHTETEN ARTIKELN

MACHINE FOR TRANSFERRING OBJECTS ALIGNED IN ROWS

(84) Etats contractants désignés:
**AT BE BG CH CY CZ DE DK EE ES FI FR GB GR
HU IE IT LI LU MC NL PT RO SE SI SK TR**

(30) Priorité: **15.11.2002 FR 0214314**

(43) Date de publication de la demande:
**10.08.2005 Bulletin 2005/32**

(73) Titulaire: **C.E.R.M.E.X. CONSTRUCTIONS
ETUDES ET
RECHERCHES DE MATERIELS POUR
L'EMBALLAGE
D'EXPEDITION
21910 Corcelles-Les-Cîteaux (FR)**

(72) Inventeur: **GOSSET, François,
c/o Cermex Ouest Conditionnement
F-14100 Lisieux (FR)**

(74) Mandataire: **Eltzer, Thomas et al
Gebo Packaging Solutions France
IP Central
5-7 rue du Commerce
ZI - CS 73445 REICHSTETT
67455 Mundolsheim Cedex (FR)**

(56) Documents cités:
**EP-A- 0 519 486      EP-A- 0 631 993
FR-A- 2 820 730      GB-A- 1 183 475
GB-A- 2 174 667      GB-A- 2 342 908
US-A- 4 012 893**

## Description

La présente invention concerne le domaine du transfert d'objets, et plus spécifiquement elle concerne le transfert en rangées successives d'objets initialement alignés.

Le document GB-A-2 174 667 décrit une machine de transfert d'objets comportant :

- un premier convoyeur propre à amener les objets disposés en ligne les uns à la suite des autres,
- un second convoyeur s'étendant perpendiculairement au premier convoyeur avec son extrémité d'entrée voisine de celui-ci,
- et une barre de pousse s'étendant transversalement à la direction du second convoyeur et déplaçable parallèlement à la direction de celui-ci de manière qu'elle vienne au contact latéral de n objets sur le premier convoyeur pour les repousser ensemble, en rangée, sur le second convoyeur.

Le fait que, dans cette machine connue, les premier et second convoyeurs soient perpendiculaires l'un à l'autre constitue un inconvénient notable en raison du changement de direction de déplacement des objets, correspondant au passage du premier convoyeur sur le second convoyeur sous l'action de la barre de pousse, qui entraîne une annulation de la vitesse des objets selon la direction de déplacement du premier convoyeur, s'accompagnant immédiatement d'une mise en vitesse des objets selon la direction du second convoyeur. Autrement dit, les objets subissent une première accélération, négative, selon la direction de déplacement du premier convoyeur, suivie d'une seconde accélération, positive, selon la direction de déplacement du second convoyeur.

Si la barre de pousse agissait directement sur les objets parvenant à son niveau, l'accélération négative d'abord et l'accélération positive ensuite seraient très importantes, et les objets seraient déséquilibrés et tomberaient.

Pour atténuer cette brutalité du transfert, il est proposé, dans ce document, de monter la barre de pousse sur un chariot mobile parallèlement au premier convoyeur, la barre restant déplaçable, par rapport au chariot, parallèlement au second convoyeur. Il devient alors possible, en combinant les deux déplacements possibles de la barre de pousse, de faire passer les objets d'un convoyeur sur l'autre selon des trajectoires plus ou moins complexes qui réduisent sensiblement l'importance des accélérations subies par les objets.

Toutefois, la machine ainsi équipée devient complexe et coûteuse.

En outre, un changement de trajectoire sur une amplitude angulaire de 90° peut ne pas convenir à tous les utilisateurs.

Le document EP.A 0 519 486 divulgue (voir figure 2) un dispositif de convoyage à deux transporteurs successifs s'étendant selon deux directions respectives formant entre elles un angle compris entre 0 et 90°. Les objets déplacés sont transférés depuis le premier transporteur sur le second transporteur s'étendant selon ladite seconde direction inclinée par rapport à la première direction du premier transporteur. Le premier transporteur déplace les objets disposés en ligne les uns à la suite des autres selon la première direction de déplacement du premier transporteur. Puis le second transporteur déplace les objets qui ont été groupés en ensembles de n objets (groupes de trois objets sur la figure), mais tous demeurant disposés en ligne les uns à la suite des autres, c'est-à-dire que tous les objets sont maintenus alignés les uns à la suite des autres dans chaque ensemble de n objets et tous les ensembles de n objets sont disposés en ligne les uns à la suite des autres. Autrement dit, le dispositif connu d'après ce document ne génère pas des rangées successives d'objets qui s'étendent de front, c'est-à-dire transversalement à la seconde direction de déplacement du second transporteur.

L'invention a essentiellement pour but de proposer une solution perfectionnée qui conserve à la machine une structure simple tout en évitant les inconvénients précités.

A cette fin, l'invention propose une machine pour transférer en rangées successives des objets initialement alignés, telle qu'exposée dans le préambule de la revendication 1. Etant agencée conformément à l'invention, cette machine se caractérise par les dispositions énoncées dans la partie caractérisante de la revendication 1.

Grâce à cet agencement, tout en gardant une machine de structure simple, les objets ont des composantes de vitesse selon les directions de transfert des premier et second transporteurs qui ne sont jamais nulles : on réduit ainsi l'importance des accélérations, négative ou positive, subies par les objets et il en résulte une plus grande stabilité des objets lors du passage du premier transporteur sur le second. Il en résulte la possibilité d'accroître la vitesse de transfert des objets, avantage qui s'intègre parfaitement dans le souci actuel des conditionneurs qui souhaitent, dans toute la mesure du possible, utiliser un nombre minimum de lignes de conditionnement tournant à une vitesse aussi élevée que possible.

Pour que le transfert s'effectue dans les meilleures conditions, il est souhaitable que lesdites première et seconde directions de transfert des premier et second transporteurs respectivement forment entre elles un angle compris entre environ 20° et 70°, le résultat optimum étant obtenu pour un angle d'environ 45° pour lequel la variation des composantes de vitesse est minimale.

Dans un mode de réalisation concret, le second transporteur est propre à déplacer les objets selon une trajectoire sensiblement rectiligne et le second transporteur comporte plusieurs organes de pousse qui sont sensiblement parallèles et supportés par des moyens de support à défilement sans fin s'étendant dans un plan approximativement perpendiculaire au plan de transfert des objets. Lesdits moyens de support à défilement sans fin peuvent alors comprendre une chaîne sans fin supportant des organes de pousse en porte à faux par une de leurs extrémités ; ou bien en variante lesdits moyens de support à défilement sans fin peuvent comprendre deux chaînes sans fin parallèles supportant des organes de pousse par les extrémités respectives de ceux-ci.

Dans un autre mode de réalisation possible, le second transporteur est propre à déplacer les objets selon une trajectoire curviligne et ce second transporteur comporte plusieurs organes de pousse supportés par des moyens de support mobiles selon une trajectoire curviligne fermée partiellement parallèle à ladite trajectoire des objets. On peut alors faire en sorte que les moyens de support soient rotatifs autour d'un axe vertical et que les organes de pousse soient rayonnants en porte à faux, ou bien encore que les moyens de support comprennent au moins une chaîne sans fin à développement curviligne parallèle au plateau et que les organes de pousse soient rayonnants en porte à faux.

Dans un exemple de réalisation, le premier transporteur déplace les objets disposés les uns à la suite des autres et chaque organe de pousse est amené latéralement au premier transporteur de manière à contacter les $n$ premiers objets présents sur ledit premier transporteur, les objets sur le premier transporteur pouvant alors être accolés les uns aux autres ou bien être séparés les uns des autres d'un pas donné.

Dans un autre exemple de réalisation, les objets sur le premier transporteur sont séparés les uns des autres d'un pas donné et l'organe de pousse est intercalé entre les objets de rangs $n$ et $n$+1 (comptés depuis le premier objet en tête du premier transporteur). Dans ce cas, si les objets sont déplacés par le premier transporteur en étant accolés les uns aux autres, on associe au premier transporteur des moyens séparateurs (par exemple du type à étoile tournante) propres à séparer les objets les uns des autres d'un pas donné.

Dans un autre mode de réalisation, on associe au premier transporteur des moyens de groupage propres à établir un intervalle donné entre les objets de rangs $n$ et $n$+1 (comptés depuis le premier objet en tête du premier transporteur) et l'organe de pousse est intercalé dans l'intervalle créé entre lesdits objets de rangs $n$ et $n$+1.

En pratique, quel que soit le mode de réalisation, il peut être avantageux que les organes de pousse soient des barres.

L'invention sera mieux comprise à la lecture de la description détaillée qui suit de certains modes de réalisation préférés donnés uniquement à titre d'exemples non limitatifs. Dans cette description, on se réfère aux dessins annexés sur desquels :

- les figures 1A et 1B sont des représentations très schématiques, respectivement en vue de dessus et de côté, d'une machine de transfert agencée conformément à l'invention ;

- la figure 1C est un graphique explicitant géométriquement l'avantage procuré par l'agencement de la machine de transfert des figures 1A et 1B ;

- les figures 2 à 4 sont des représentations très schématiques, en vue de dessus, de diverses variantes de réalisation d'une machine de transfert agencée conformément à l'invention ;

- la figure 5 est une vue de dessus d'un exemple concret de machine de transfert conforme à l'invention ; et

- les figures 6 et 7 sont des représentations schématiques de respectivement deux autres modes de réalisation conformes à l'invention.

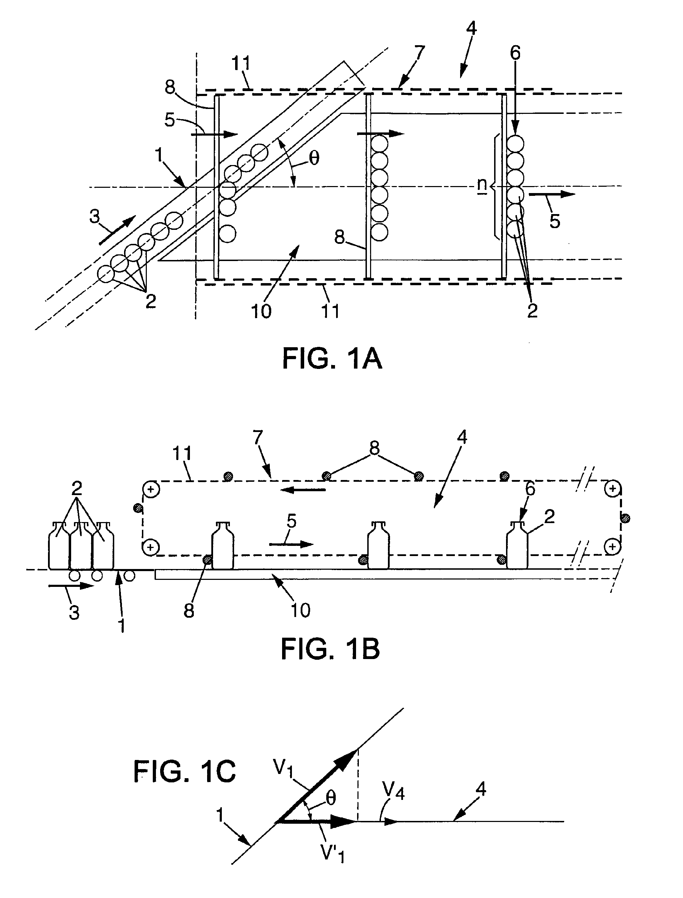

En se reportant tout d'abord aux figures 1A et 1B, un premier transporteur 1 (transporteur motorisé, par exemple du type convoyeur à bande ou à plateaux, ou transporteur non motorisé) amène (flèche 3) des objets 2 (par exemple des bouteilles comme illustré) disposés en ligne les uns à la suite des autres ; dans l'exemple illustré, les objets 2 sont accolés les uns contre les autres, bien que cette disposition ne soit pas nécessaire comme cela apparaîtra plus loin.

Un second transporteur 4 évacue (flèche 5) les objets 2 disposés en rangées successives 6 de $n$ objets de front.

A cette fin, le second transporteur 4 comprend des moyens de déplacement d'objets 7 avec au moins un organe de pousse constitué sous forme d'une barre de pousse 8 qui est déplaçable (flèche 5) pour être amenée au contact latéral de $n$ objets alignés sur le premier transporteur pour les repousser, ensemble, sur un plateau (10) du second transporteur où ils se trouvent disposés en une rangée de $n$ objets. Le plateau 10 s'étend latéralement au premier transporteur 1 comme cela apparaît à la figure 1A.

Les premier et second transporteurs 1 et 4 sont disposés de manière que les directions 3, 5 de transfert des objets sur les premier et second transporteurs 1 et 4 respectivement forment un angle $\theta$ entre elles.

Conformément à l'invention, l'angle $\theta$ formé par les deux transporteurs 1 et 4 est compris entre 0 et 90°, bornes exclues (c'est-à-dire que $\theta$ n'est ni nul - les deux transporteurs 1 et 4 ne sont pas parallèles -, ni égal à 90° - les deux transporteurs ne sont pas mutuellement perpendiculaires -).

Cette disposition assure que le transfert des objets du premier transporteur 1 sur le second transporteur 4 s'effectue sans annulation brutale de vitesse au sortir du premier transporteur 1 et sans accroissement brutal de vitesse à l'entrée sur le second transporteur 4. A la figure 1C, on a représenté par un vecteur $V_1$ la vitesse des objets 2 sur le premier transporteur 1 (schématisé par l'axe 1). Le vecteur $V_1$ est dirigé selon la direction de déplacement du transporteur 1 et forme un angle $\theta$ avec le second transporteur 4 (schématisé par l'axe 4). Le vecteur $V_1$ se projette sur l'axe 4 en un vecteur $V_1'$ tel que

$$V_1' = V_1 \cos \theta$$

On constate donc que, lors de son passage sur le second transporteur 4, chaque objet 2 possède déjà une composante de vitesse $V_1'$ selon la direction de déplacement du second transporteur et que, si la barre de pousse 8 du second transporteur 4 se déplace avec une vitesse $V_4$, l'accroissement de vitesse subi par chaque objet est $V_4 - V_1'$, soit $V_4 - V_1 \cos \theta$. On réduit ainsi les accélérations auxquelles les objets sont soumis lors du transfert d'un transporteur à l'autre, et on accroît alors la stabilité des objets. On peut en particulier faire en sorte que $V_4 = V_1$, auquel cas l'accroissement de vitesse devient égal à $V_1(1-\cos \theta)$.

En pratique, les dispositions conformes à l'invention semblent devoir offrir les meilleurs avantages si l'angle $\theta$ est compris entre environ 20° et 70°. Pour des vitesses $V_1$ et $V_4$ données, le résultat le plus avantageux est obtenu pour un angle $\theta$ d'environ 45° (cas illustré aux figures 1A et 1C).

Pour la mise en oeuvre pratique des dispositions principales qui viennent d'être indiquées, on a recours aux aménagements suivants.

Pour ce qui est des moyens de déplacement d'objets 7, la mise en oeuvre d'une barre de pousse unique à déplacement alternatif comme illustré dans le document précité GB-A-2 174 667 se révèle peu pratique eu égard à la course relativement importante et surtout du fait de son déplacement alternatif qui empêche d'atteindre des cadences élevées souhaitées par les utilisateurs.

Dans le cadre de la présente invention, il est donc proposé d'agencer, dans un premier mode de réalisation, les moyens de déplacement d'objets 7 avec plusieurs barres de pousse 8 espacées régulièrement et mutuellement parallèles, qui sont supportées par des moyens de support à défilement sans fin 11 (tels qu'au moins une chaîne sans fin). Lesdits moyens de support s'étendent dans un plan approximativement perpendiculaire au plateau 10 et déplacent les barres 8 au voisinage de la surface du transporteur 1 et du plateau 10 dans la phase de pousse des objets 2 et au-dessus des objets dans la phase de retour. Finalement ces moyens peuvent se présenter comme illustré à la figure 1B, sous forme d'une chaîne sans fin 11 qui supporte une pluralité de barres de pousse 8 régulièrement espacées et qui s'enroulent en boucle fermée sur des poulies de renvoi selon toute trajectoire requise.

Deux agencements sont envisageables.

Dans l'exemple illustré à la figure 1A, les moyens de déplacement d'objets 7 comprennent deux chaînes sans fin 11 disposées parallèlement l'une à l'autre, au-dessus du plan de transfert formé par le premier transporteur 1 et le plateau 10 du second transporteur 4, et de part et d'autre ou sur les côtés de ceux-ci. Ainsi, les barres de pousse 8 sont supportées à leurs deux extrémités respectivement par les deux chaînes sans fin 11.

Dans ce cas, il est nécessaire que chaque barre de pousse 8 soit introduite perpendiculairement entre deux objets consécutifs présents sur le premier transporteur 1. La mise en oeuvre la plus simple consiste à amener les barres 8 par le haut, comme illustré aux figures 1A et 1B. Il est donc nécessaire :

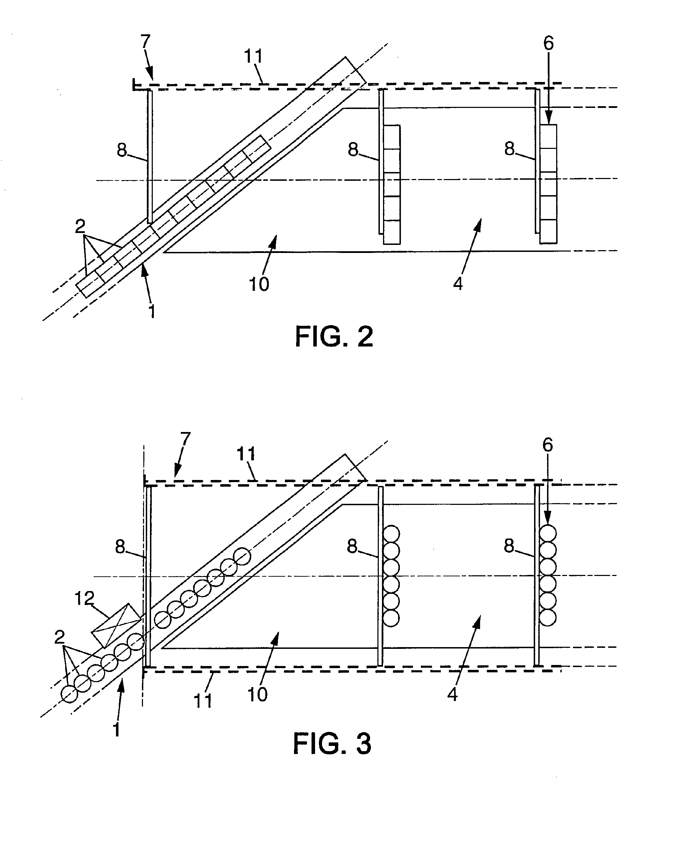

- soit de séparer des groupes de $n$ objets comme illustré à la figure 3, en mettant en oeuvre des moyens séparateurs 12 de tout type approprié connu de l'homme du métier (par exemple séparateur latéral à frein intermittent),

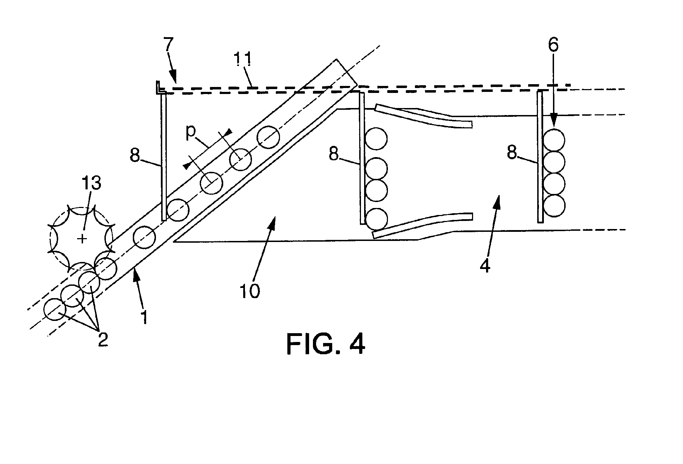

- soit de séparer systématiquement tous les objets 2 d'un pas donné p comme illustré à la figure 4, en mettant en oeuvre des moyens d'espacement 13 de tout type approprié connu de l'homme du métier (par exemple étoile tournante),

si le transporteur 1 reçoit les objets accolés comme illustré sur les figures 1A, 1B.

Dans l'exemple illustré aux figures 2 et 4, les moyens de déplacement d'objets 7 comprennent une seule chaîne sans fin 11 disposée unilatéralement et supportant les barres de pousse 8 en porte à faux par une seule de leurs extrémités. Un tel agencement peut s'utiliser dans les mêmes conditions qu'exposé précédemment, avec espacement des objets 2 ou de groupes d'objets 2.

Toutefois, cet agencement avec barres de pousse en porte à faux offre l'avantage supplémentaire de pouvoir être mis en oeuvre avec des objets accolés, comme illustré à la figure 2. Chaque barre de pousse 8 est alors amenée par le côté du premier transporteur 1 qui est opposé au second transporteur 4, de manière telle que son extrémité libre vienne en contact latéralement avec l'objet de rang n pour repousser celui-ci, puis successivement les autres. La mise en oeuvre de cet agencement nécessite que les objets soient suffisamment grands pour être assuré que l'extrémité libre de chaque barre de pousse vienne contacter le seul objet de rang $\underline{n}$, sans toucher l'objet de rang n+1 ; cet agencement pourra convenir en particulier (bien que cela ne soit pas exclusif) pour déplacer des objets présentant des faces planes, tels que des "briques" comme illustré à la figure 2.

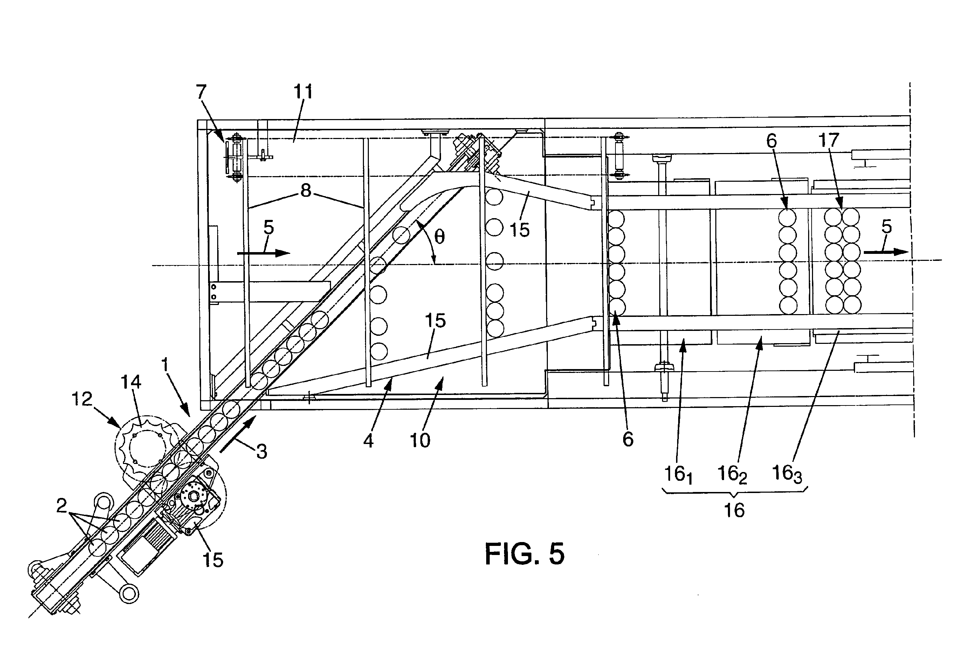

A la figure 5 est illustré en vue de dessus un exemple concret de machine de transfert mettant en oeuvre les dispositions conformes à l'invention. Dans cet exemple, les objets 2, acheminés par le premier transporteur 1 et accolés les uns à la suite des autres, sont séparés en groupes de six objets alignés par les moyens séparateurs 12 ici constitués sous forme d'une étoile tournante 14 entraînée par des moyens 15 agencés pour provoquer cycliquement un espacement entre deux objets. Les moyens de déplacement d'objets 7 du second transporteur 4 sont du type à barres de pousse 8 supportées en porte à faux par une chaîne 11 unilatérale. Des guides 15 sont associés au plateau 10 pour guider les objets (en appui contre une barre de pousse 8) en déplacement sur le plateau 10 du second transporteur 4, de manière à rassembler et à maintenir les n objets accolés en une rangée 6. Dans l'exemple illustré à la figure 5, le second transporteur 4 amène les rangées 6 d'objets à un troisième transporteur 16 (par exemple transporteur motorisé du type convoyeur à bande ou à plateaux, lui-même constitué d'une succession de transporteurs $16_1$, $16_2$, $16_3$ possédant des vitesses différentes de manière à réceptionner les rangées 6 successives d'objets sans que celles-ci subissent de ralentissements excessifs, d'une part, puis finalement à rassembler plusieurs rangées successives de manière à former un lot 17 d'une pluralité d'objets 2 assemblés en lignes et colonnes, par exemple pour alimenter une machine à empaqueter.

Dans les exemples donnés aux figures 3 à 5, on a indiqué que les barres de pousse 8 étaient amenées par le haut dans les intervalles entre objets ou groupes d'objets, car il s'agit là de la solution technique qui semble la plus simple eu égard au fait que les barres 8 sont ensuite déplacées au-dessus du transporteur 1 et du plateau 10. Toutefois, si cela est nécessaire et techniquement réalisable, les barres pourraient également être amenées par le dessous dans lesdits intervalles.

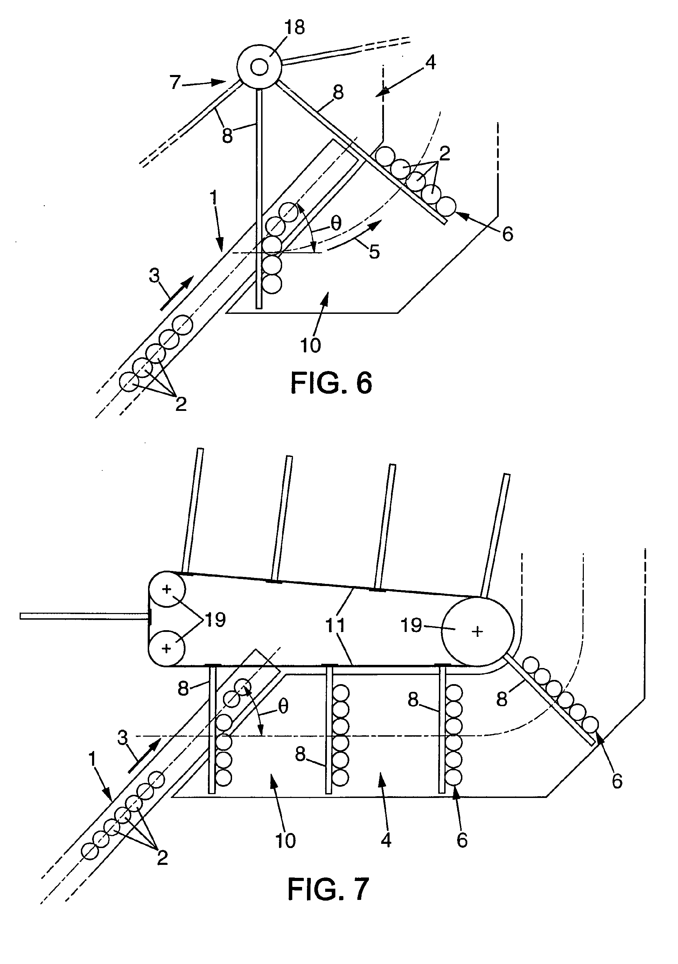

A la figure 6 est illustré un autre mode de réalisation dans lequel les moyens 7 de déplacement d'objets sont du type rotatif, avec un moyeu 18 d'axe vertical supportant les barres de pousse 8 rayonnantes. Le moyeu 18 peut être disposé de telle manière que chaque barre de pousse 8 parvienne au-dessus du premier transporteur 1 sous un angle θ comme défini ci-dessus l'angle θ est ici l'angle formé entre l'axe du premier transporteur 1 et la tangente à la trajectoire circulaire (flèche 5) de la barre 8 à l'endroit où celle-ci intersecte l'axe du transporteur 1. Les objets 2 sont alors entraînés, par chaque barre de pousse 8, en une rangée 6 selon une trajectoire en arc de cercle. Le plateau 10 est agencé en conséquence et il peut avantageusement être équipé d'un guide extérieur de manière que les objets 2, alignés en une rangée 6 et en appui contre la barre 8, suivent une trajectoire en arc de cercle sans dériver vers l'extérieur.

A la figure 7 est illustré un autre mode de réalisation qui combine les dispositions précédentes. Les moyens 7 de déplacement d'objets 2 comprennent un moyen de support 11 allongé en boucle fermée tel qu'une chaîne sans fin qui s'enroule selon tout contour curviligne souhaité : elliptique, ovale, ou autre. L'entraînement des objets peut alors s'effectuer sur un parcours complexe, par exemple un tronçon sensiblement rectiligne suivi d'un tronçon en arc de cercle, comme illustré à la figure 7. Le moyen de support 11 est alors supporté par des roues 19 disposées et dimensionnées de la manière requise en fonction de la trajectoire (flèche 5) à réaliser.

On notera également qu'il est possible de constituer des machines de transfert de plus grande capacité, comportant plusieurs premiers transporteurs disposés parallèlement les uns aux autres et un second transporteur de grande largeur ou plusieurs seconds transporteurs disposés parallèlement les uns aux autres, les moyens de déplacement à barres de pousse engageant les objets simultanément sur les premiers transporteurs et les transférant en rangée(s) sur le second transporteur ou sur les seconds transporteurs simultanément.

Dans les divers exemples exposés ci-dessus, on a considéré que chaque organe de pousse était constitué sous forme d'une barre. Cette barre peut être constituée sous toute forme appropriée : barre simple comme illustré sur les dessins, barre à encoches ou évidements conformés en fonction de la forme des objets, barre à retour extrême (notamment pour les transporteurs 4 de type tournant, afin d'empêcher les objets de glisser vers l'extérieur sous l'action de la force centrifuge), etc. On pourrait également constituer les organes de pousse sous toute autre forme appropriée à la fonction de pousse : plaque, ensemble de palettes, ....

## Revendications

1. Machine pour transférer en rangées successives (6) des objets (2) initialement alignés, comprenant :

   - un premier transporteur (1) possédant une première direction (3) de transfert est propre à déplacer les objets (2) disposés en ligne les uns à la suite des autres selon ladite première direction (3) de transfert, et
   - un second transporteur (4) possédant une seconde direction (5) de transfert formant avec la susdit première direction (3) de transfert un angle θ compris entre 0 et 90*, bornes exclues (θ≠0, θ≠90°), ledit seconde transporteur (4) comprenant un plateau (10) disposé latéralement au premier transporteur (1) et s'étendant selon ladite seconde direction (5) de transfert, **caractérisée en ce que** le second transporteur comprend
   - des moyens (7) de déplacement d'objets avec au moins un organe (8) de pousse qui est déplaçable transversalement au premier transporteur (1) et au dessus du plateau (10) selon ladite seconde direction (5) de transfert, de manière à venir au contact latéral de n objets (2) sur le premier transporteur (1) et à les repousser ensemble, selon ladite seconde direction (5) de transfert, sur le susdit plateau (10) en une rangée (6) de n objets de front,

   ce grâce à quoi les objets (2) ont des composantes de vitesse selon les directions (3, 5) de transfert desdits premier et second transporteurs (1, 4), respectivement, qui ne sont jamais nulles.

**2.** Machine selon la revendication 1, **caractérisée en ce que** lesdites première et seconde directions (3, 5) de transfert des premier et second transporteurs (1, 4) respectivement forment entre elles un angle (θ) compris entre environ 20° et 70°.

**3.** Machine selon la revendication 2, **caractérisée en ce que** lesdites première et seconde direction (3, 5) de transfert des premier et second transporteurs (1, 4) respectivement forment entre elles un angle (θ) d'environ 45°.

**4.** Machine selon l'une quelconque des revendications 1 à 3, **caractérisée en ce que** le second transporteur (4) est propre à déplacer les objets (2) selon une trajectoire sensiblement rectiligne et **en ce que** le second transporteur (4) comporte plusieurs organes (8) de pousse qui sont sensiblement parallèles et supportés par des moyens (11) de support à défilement sans fin s'étendant dans un plan approximativement perpendiculaire au plan de transfert des objets (2).

**5.** Machine selon la revendication 4, **caractérisée en ce que** les moyens de support à défilement sans fin comprennent une chaîne (11) sans fin supportant des organes (8) de pousse en porte à faux par une de leurs extrémités.

**6.** Machine selon la revendication 4, **caractérisée en ce que** les moyens de support à défilement sans fin comprennent deux chaînes (11) sans fin parallèles supportant des organes (8) de pousse par les extrémités respectives de ceux-ci.

**7.** Machine selon l'une quelconque des revendications 1 à 3, **caractérisée en ce que** le second transporteur (4) est propre à déplacer les objets (2) selon une trajectoire (5) curviligne et **en ce que** ce second transporteur (4) comporte plusieurs organes (8) de pousse supportés par des moyens (11) de support mobiles selon une trajectoire curviligne fermée partiellement parallèle à ladite trajectoire (5) des objets (2).

**8.** Machine selon la revendication 7, **caractérisée en ce que** les moyens (11) de support sont rotatifs autour d'un axe (18) vertical et **en ce que** les organes (8) de pousse sont rayonnants en porte à faux.

**9.** Machine selon la revendication 7, **caractérisée en ce que** les moyens de support comprennent au moins une chaîne (11) sans fin à développement curviligne parallèle au plateau (10) et **en ce que** les organes (8) de pousse sont rayonnants en porte à faux.

**10.** Machine selon l'une quelconque des revendications 5, 7, 8 ou 9, **caractérisée en ce que** le premier transporteur (1) déplace les objets (2) disposés les uns à la suite des autres et **en ce que** chaque organe (8) de pousse est amené latéralement au premier transporteur (1) de manière à contacter les $n$ premiers objets (2) présents sur ledit premier transporteur (1).

**11.** Machine selon la revendication 10, **caractérisée en ce que** les objets (2) sur le premier transporteur (1) sont accolés les uns aux autres.

**12.** Machine selon la revendication 10, **caractérisée en ce que** les objets (2) sur le premier transporteur (1) sont séparés les uns des autres d'un pas ($\underline{p}$) donné.

**13.** Machine selon la revendication 5 ou 6, **caractérisée en ce que** les objets (2) sur le premier transporteur (1) sont séparés les uns des autres d'un pas ($\underline{p}$) donné et **en ce que** l'organe (8) de pousse est intercalé entre les objets de rangs $\underline{n}$ et $\underline{n}+1$ (comptés depuis le premier objet en tête du premier transporteur).

**14.** Machine selon la revendication 11 ou 13, **caractérisée en ce que** les objets (2) sont accolés les uns à la suite des autres sur le premier transporteur (1) et **en ce qu'**elle comporte, associés au premier transporteur (1), des moyens (13) séparateurs propres à séparer les objets (2) les uns des autres d'un pas donné.

**15.** Machine selon la revendication 5, **caractérisée en ce qu'**au premier transporteur (1) sont associés des moyens (12) de groupage propres à établir un intervalle donné entre les objets de rangs $\underline{n}$ et $\underline{n}+1$ (comptés depuis le premier objet en tête du premier transporteur) et **en ce que** l'organe (8) de pousse est intercalé dans l'intervalle créé entre lesdits objets de rangs $\underline{n}$ et $\underline{n}+1$.

**16.** Machine selon l'une quelconque des revendications 1 à 15, **caractérisée en ce que** chaque organe (8) de pousse est une barre.

**Patentansprüche**

**1.** Vorrichtung zum Übertragen von ursprünglich ausgerichteten Artikeln (2) in aufeinanderfolgenden Reihen (6), umfassend:

     - ein erstes Förderband (1), das eine erste Übertragungsrichtung (3) besitzt und geeignet ist, die Artikel (2), die in einer Linie nacheinander angeordnet sind, entlang der ersten Übertragungsrichtung (3) zu bewegen, und
     - ein zweites Förderband (4), das eine zweite Übertragungsrichtung (5) besitzt, die mit der oben erwähnten ersten Übertragungsrichtung (3) einen Winkel θ zwischen 0 und 90°, ausschließlich der Grenzen (θ≠0, θ≠90°), bildet, wobei das zweite Förderband (4) eine Platte (10) umfasst, die seitlich zum ersten Förderband (1) angeordnet ist und sich in die zweite Übertragungsrichtung (5) erstreckt, **dadurch gekennzeichnet, dass** das zweite Förderband umfasst:
- Mittel (7) zum Bewegen von Artikeln mit mindestens einem Schubelement (8), das quer zum ersten Förderband (1) und über der Platte (10) in die zweite Übertragungsrichtung (5) beweglich ist, um in seitlichen Kontakt mit n Artikeln (2) auf dem ersten Förderband (1) zu kommen und sie gemeinsam in die zweite Übertragungsrichtung (5) auf der oben erwähnten Platte (10) in einer Reihe (6) von n Frontartikeln zurückzuschieben,
wodurch die Artikel (2) Geschwindigkeitskomponenten in die Übertragungsrichtungen (3, 5) der ersten bzw. zweiten Förderbänder (1, 4) haben, die niemals gleich Null sind.

2. Vorrichtung nach Anspruch 1, **dadurch gekennzeichnet, dass** die erste und die zweite Übertragungsrichtung (3, 5) der ersten und zweiten Förderbänder (1, 4) zwischen sich jeweils einen Winkel (θ) zwischen ungefähr 20° und 70° bilden.

3. Vorrichtung nach Anspruch 2, **dadurch gekennzeichnet, dass** die erste und die zweite Übertragungsrichtung (3, 5) der ersten bzw. zweiten Förderbänder (1, 4) zwischen sich jeweils einen Winkel (θ) von ungefähr 45° bilden.

4. Vorrichtung nach einem der Ansprüche 1 bis 3, **dadurch gekennzeichnet, dass** das zweite Förderband (4) geeignet ist, die Artikel (2) entlang einer im Wesentlichen geraden Bahn zu bewegen, und dass das zweite Förderband (4) mehrere Schubelemente (8) umfasst, die im Wesentlichen parallel sind und von endlos ablaufenden Tragmitteln (11) getragen werden, die sich in einer Ebene annähernd senkrecht auf die Übertragungsebene der Artikel (2) erstrecken.

5. Vorrichtung nach Anspruch 4, **dadurch gekennzeichnet, dass** die endlos ablaufenden Tragmittel eine Endloskette (11) umfassen, die Schubelemente (8) trägt, die mit einem ihrer Enden überstehend sind.

6. Vorrichtung nach Anspruch 4, **dadurch gekennzeichnet, dass** die endlos ablaufenden Tragmittel zwei parallele Endlosketten (11) umfassen, die Schubelemente (8) mit den jeweiligen Enden derselben tragen.

7. Vorrichtung nach einem der Ansprüche 1 bis 3, **dadurch gekennzeichnet, dass** das zweite Förderband (4) geeignet ist, die Artikel (2) entlang einer gekrümmten Bahn (5) zu bewegen, und dass dieses zweite Förderband (4) mehrere Schubelemente (8) umfasst, die von Tragmitteln (11) getragen werden, die entlang einer geschlossenen gekrümmten Bahn, die teilweise zur Bahn (5) der Artikel (2) parallel ist, beweglich sind.

8. Vorrichtung nach Anspruch 7, **dadurch gekennzeichnet, dass** die Tragmittel (11) um eine Vertikalachse (18) drehbar sind, und dass die Schubelemente (8) überstehend angeordnet sind.

9. Vorrichtung nach Anspruch 7, **dadurch gekennzeichnet, dass** die Tragmittel mindestens eine Endloskette (11) mit gebogenem Verlauf parallel zur Platte (10) umfassen, und dass die Schubelemente (8) überstehend angeordnet sind.

10. Vorrichtung nach einem der Ansprüche 5, 7, 8 oder 9, **dadurch gekennzeichnet, dass** das erste Förderband (1) die hintereinander angeordneten Artikel (2) bewegt, und dass jedes Schubelement (8) seitlich zum ersten Förderband (1) gebracht wird, um mit den n ersten Artikeln (2), die auf dem ersten Förderband (1) liegen, Kontakt aufzunehmen.

11. Vorrichtung nach Anspruch 10, **dadurch gekennzeichnet, dass** die Artikel (2) auf dem ersten Förderband (1) aneinander befestigt sind.

12. Vorrichtung nach Anspruch 10, **dadurch gekennzeichnet, dass** die Artikel (2) auf dem ersten Förderband (1) voneinander um einen gegebenen Abstand (p) getrennt sind.

13. Vorrichtung nach Anspruch 5 oder 6, **dadurch gekennzeichnet, dass** die Artikel (2) auf dem ersten Förderband (1) voneinander um einen gegebenen Abstand (p) getrennt sind, und dass das Schubelement (8) zwischen den Artikeln der Ränge n und n+1 (gezählt vom ersten Artikel an der Spitze des ersten Förderbandes) angeordnet ist.

14. Vorrichtung nach Anspruch 11 oder 13, **dadurch gekennzeichnet, dass** die Artikel (2) nacheinander auf dem ersten Förderband (1) befestigt sind, und dass sie in Verbindung mit dem ersten Förderband (1) Trennmittel (13) umfasst, die geeignet sind, die Artikel (2) in einem gegebenen Abstand voneinander zu trennen.

15. Vorrichtung nach Anspruch 5, **dadurch gekennzeichnet, dass** mit dem ersten Förderband (1) Gruppierungsmittel (12) verbunden sind, die geeignet sind, einen gegebenen Zwischenraum zwischen den Artikeln der Ränge n und n+1 (gezählt vom ersten Artikel an der Spitze des ersten Förderbandes) herzustellen, und dass das Schubelement (8) in dem zwischen den Artikeln der Ränge n und n+1 erzeugten Zwischenraum angeordnet ist.

16. Vorrichtung nach einem der Ansprüche 1 bis 15, **dadurch gekennzeichnet, dass** jedes Schubelement (8) ein Balken ist.

## Claims

1. A machine for transferring initially aligned objects (2) in successive rows (6), comprising

   - a first conveyor (1) having a first transfer direction (3) and suitable for bringing the objects (2) placed in line one after the other along said first direction (3)
   and
   - a second conveyor (4) having a second transfer direction (5) making with said first transfer direction (3) an angle θ lying between 0 and 90°, limits excluded (θ≠0, θ≠90°), said second conveyor (4) comprising a tray (10) placed to the side of the first conveyor (1) and extending along said second transfer direction (5) **characterized in that** The second conveyor (4) comprises means (7) of moving objects with at least one pushing member (8) movable transversely to the first conveyor (1) and above the tray (10) along said second transfer direction (5), so that it comes into lateral contact with n objects (2) on the first conveyor to push them together, along said second transfer direction (5), in a row (6) of n aligned objects on the abovementioned tray (10) thanks to which the objects (2) have speed components in the transfer directions (3, 5) of said first and second conveyor (1, 4), respectively, which are never zero.

2. The machine as claimed in claim 1, **characterized in that** said first and second transfer directions (3, 5) of said first and second conveyors (1, 4) respectively form between them an angle θ lying between approximately 20° and 70°.

3. The machine as claimed in claim 2, **characterized in that** said first and second transfer directions (3, 5) of said first and second conveyors (1, 4) respectively form between them an angle θ of approximately 45°.

4. The machine according to any of claims 1 to 3, **characterized in that** the second conveyor (4) is suitable for moving the objects (2) on a substantially rectilinear trajectory and **in that** the second conveyor (4) comprises several pushing members (8) which are substantially parallel and supported by endless running support means (11) extending in a plane approximately perpendicular to the plane of transfer of the objects.

5. The machine as claimed in claim 4, **characterized in that** the endless running support means comprise an endless chain (11) supporting pushing members (8) overhanging at one of their ends.

6. The machine as claimed in claim 4, **characterized in that** the endless running support means comprise two parallel endless chains (11) supporting pushing members (8) by the respective ends of the latter.

7. The machine as claimed in any of claims 1 to 3, **characterized in that** the second conveyor (4) is suitable for moving the objects (2) on a curvilinear trajectory (5) and **in that** this second conveyor (4) comprises several pushing members (8) supported by support means (11) mobile on a partially closed curvilinear trajectory parallel to said trajectory (5) of the objects.

8. The machine as claimed in claim 7, **characterized in that** the support means (11) are rotatable about a vertical shaft (18) and **in that** the pushing members (8) are radiating in an overhanging manner.

9. The machine as claimed in claim 7, **characterized in that** the support means comprise at least one endless chain (11) opening out in a curvilinear manner parallel to the tray (10) and **in that** the pushing members (8) are radiating in an overhanging manner.

10. The machine according to any of claims 5, 7, 8 or 9, **characterized in that** the first conveyor (1) moves the objects (2) placed one after the other and **in that** each pushing member (8) is brought laterally to the first conveyor (1) in order to contact the first n objects (2) present on said first conveyor.

11. The machine as claimed in claim 10, **characterized in that** the objects (2) on the first conveyor (1) are juxtaposed to one another.

12. The machine as claimed in claim 10, **characterized in that** the objects (2) on the first conveyor (1) are separated from one another by a given pitch (p).

13. The machine according to any of claims 5 or 6, **characterized in that** the objects (2) on the first conveyor (1) are separated from one another by a given pitch (p) and **in that** the pushing member (8) is interposed between the object numbers n and n+1 (counted from the first object at the head of the first conveyor).

14. The machine as claimed in claim 11 or 13, **characterized in that** the objects (2) are juxtaposed one after the other on the first conveyor (1) and **in that** it comprises, associated with the first conveyor (1), separator means (13) suitable for separating the objects from one another by a given pitch.

15. The machine as claimed in claim 5, **characterized in that** grouping means (12) suitable for establishing a given gap between the object numbers $n$ and $n$+1 (counted from the first object at the head of the first conveyor) are associated with the first conveyor (1) and **in that** the pushing member (8) is interposed in the gap created between said object numbers n and n+1.

16. The machine according to any of claims 1 to 15, **characterized in that** each pushing member (8) is a bar.

FIG. 1A

FIG. 1B

FIG. 1C

FIG. 2

FIG. 3

FIG. 4

FIG. 5

FIG. 6

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2174667 A

- EP 0519486 A